(19) Europäisches Patentamt
European Patent Office
Office européen des brevets

(11) **EP 3 286 734 B1**

(12) **EUROPEAN PATENT SPECIFICATION**

(45) Date of publication and mention
of the grant of the patent:
**24.06.2020  Bulletin 2020/26**

(21) Application number: **16722544.0**

(22) Date of filing: **25.04.2016**

(51) Int Cl.:
*G06T 7/62* (2017.01)        *G06T 7/00* (2017.01)
*G06T 7/60* (2017.01)

(86) International application number:
**PCT/EP2016/059166**

(87) International publication number:
**WO 2016/170180 (27.10.2016 Gazette 2016/43)**

(54) **ANALYSIS METHOD OF BLOOD PLATELETS AGGREGATE**

ANALYSEVERFAHREN FÜR BLUTPLÄTTCHENAGGREGAT

MÉTHODE D'ANALYSE D'AGRÉGAT DE PLAQUETTES SANGUINES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.04.2015  EP 15164996**

(43) Date of publication of application:
**28.02.2018  Bulletin 2018/09**

(73) Proprietor: **Université Libre de Bruxelles
1050 Bruxelles (BE)**

(72) Inventors:
• **DUBOIS, Frank**
 **1050 Bruxelles (BE)**
• **YOURASSOWSKY, Catherine**
 **1050 Bruxelles (BE)**
• **UZUREAU, Pierrick**
 **5060 Velaine Sur Sambre (BE)**
• **RIBEIRO DE SOUSA, Daniel**
 **7000 Mons (BE)**
• **ZOUAOUI BOUDJELTIA, Karim**
 **6540 Lobbes (BE)**

(74) Representative: **Pronovem
Office Van Malderen
Avenue Josse Goffin 158
1082 Bruxelles (BE)**

(56) References cited:
 **US-A1- 2011 045 993**

• **K.F. TAMRIN ET AL: "An experimental
investigation of three-dimensional particle
aggregation using digital holographic
microscopy", OPTICS AND LASERS IN
ENGINEERING, vol. 68, 13 January 2015
(2015-01-13), pages 93-103, XP055286214,
AMSTERDAM, NL ISSN: 0143-8166, DOI:
10.1016/j.optlaseng.2014.12.011**
• **PASQUALE MEMMOLO ET AL: "3D morphometry
of red blood cells by digital holography",
CYTOMETRY PART A, vol. 85, no. 12, 19
September 2014 (2014-09-19), pages 1030-1036,
XP55209821, ISSN: 1552-4922, DOI:
10.1002/cyto.a.22570**
• **KARIM ZOUAOUI BOUDEJLTIA ET AL:
"Quantitative analysis of platelets aggregates in
3D by digital holographic microscopy",
BIOMEDICAL OPTICS EXPRESS, vol. 6, no. 9, 1
September 2015 (2015-09-01), pages 3556-3563,
XP055285965, United States ISSN: 2156-7085,
DOI: 10.1364/BOE.6.003556**

## Description

### Field of the Invention

The present invention is related to the use of digital holographic microscopy (DHM) or differential digital holographic microscopy (DDHM) for the quantitative analysis of platelets or platelets aggregates.

### Background

The platelet spreading and retraction play a pivotal role in the platelet plugging and the thrombus formation. In routine laboratory, platelet function tests include exhaustive information about the role of the different receptors present at the platelet surface without information on the 3D structure of platelet aggregates.

Blood leakage at the site of endothelium failure is counteracted by a two-step process, the haemostasis: the primary haemostasis step involves thrombocytes, the platelets coming together to form a plug, while in the secondary haemostasis step, the coagulation factors of the bloodstream form a fibrin meshwork. Platelets are 2-3 $\mu$m wide of cytoplasm with biconvex disc shape exclusively found in the blood of mammals.

They form a plug in a stepwise mechanism. First, circulating platelets are recruited at the site of injury by the exposure of deep tissue structures. The adhesion of these platelets to the surface triggers the recruitment and aggregation of novel platelets. Upon platelet adhesion, surface receptors are activated.

Thanks to these receptors, platelets are bridged together through the interaction with factors such as fibrinogen or Von Willebrand factor (**vWF**) that present multiple binding sites. Activation also triggers morphological changes of the platelets. Upon adhesion on the wound, the round shaped platelets of the bloodstream flatten on the surface and develop filopodia which intertwine and tighten the platelet aggregate.

Thus for more than 4 decades, factors inducing platelet aggregation seemed straightforward, requiring a stimulus, a soluble protein (fibrinogen), and a membrane-bound platelet receptor (integrin $\alpha$IIb$\beta$3 or GPIIb-IIIa), leading to a simple unified model of platelet aggregation as described by KS. Sakariassen, E. Fressinaud, JP. Girma, D. Meyer and Baumgartner in: "Role of platelet membrane glycoproteins and von Willebrand factor in adhesion of platelets to subendothelium and collagen". Ann N Y Acad Sci. 516:52-65 (1987). However, recent technical advances allowing real time analysis of platelet aggregation *in-vitro* and in animal models demonstrated much more complex dynamical processes than previously expected (Jakson et Al. "Dynamics of platelet thrombus formation." J Thromb Haemost. 7 Suppl 1:17-20 (2009)).

In particular, the mechanisms by which hemodynamic conditions lead to platelets adhesion and aggregation are still incompletely understood. Actual results suggest that platelet tethering requires different receptor/ligand pairs at low (up to 1000 s$^{-1}$: fibrinogen/integrin $\alpha$IIb$\beta$3) and high (up to 10000 s$^{-1}$: vWF/ GPIb glycoprotein bonds) shear rates of the bloodstream (SP. Jackson. The growing complexity of platelet aggregation. Blood 109:5087-5095 (2007)).

Publication "An experimental investigation of three-dimensional particle aggregation using digital holographic microscopy" to K. F. Tamrin et al. presents an off-axis digital holographic microscopy procedure for measuring distribution of dense micrometer (2 microm) particles in a liquid solution. Publication "3D morphometry of red blood cells by digital holography" to Pasquale Memmolo et al. presents a procedure for 3D shape measurement of red blood cells with digital holography.

In clinical practice, platelet function tests include exhaustive information about the role of the different receptors present at the surface of platelets. These tests are mainly based on turbidimetric optical detection, multiple electrode aggregometry and flow cytometry. With these tests, it is impossible to analyze an important process after platelets adhesion, the spreading and the retraction. And yet, the spreading and the retraction play a pivotal role in the platelet adhesion and the thrombus formation.

### Aims of the invention

The present invention aims to provide a method for quantitative 3D morphology of platelet aggregation.

### Summary of the Invention

The present invention is related to a method for the quantitative analysis of cells or cells aggregates according to the appended claims.

### Figures

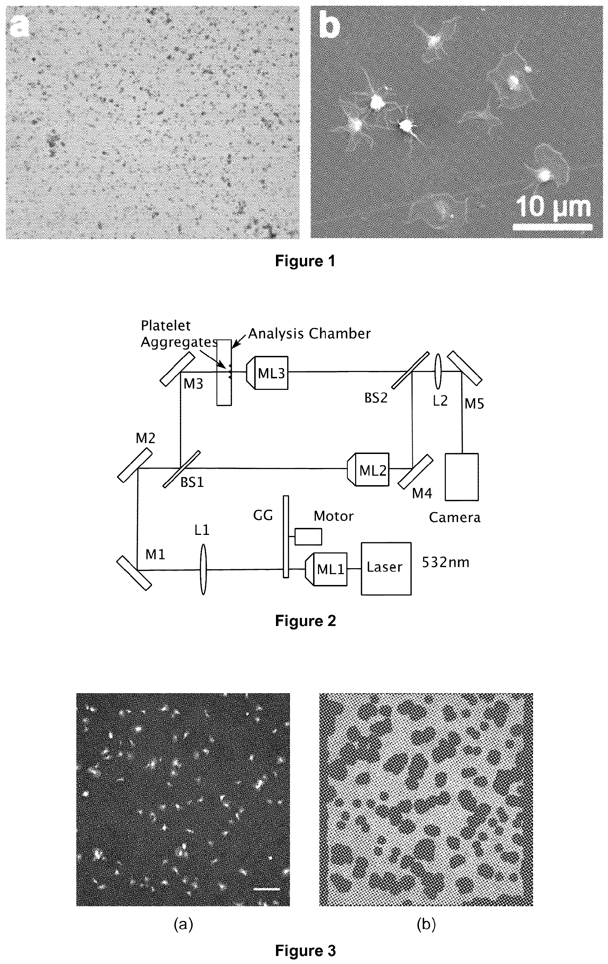

Fig. 1 (a) Platelet aggregates picture obtained with the Impact-R camera (original magnification x400). The whole blood was exposed to a shear rate of 100 s-1. (b) Scan Electron Microscopy of platelet aggregates in the well.
Fig. 2. Digital holographic microscope scheme GG: Rotating Ground Glass; L1 and L2: Lenses; BS1 and BS2: Beam Splitters; ML1-3: Microscope Lenses, M1-5: Mirrors.
Fig. 3. (a) Phase image showing platelet aggregates obtained with DHM (scale bar = 20μm). The background phase value (Region where there is no platelet) is arbitrarily set to be equal to the grey level 30 in average. (b) The phase image of (a) is multiplied by a binary mask in order to keep the only background region. For visibility purpose, the phase values are multiplied by a factor 2.

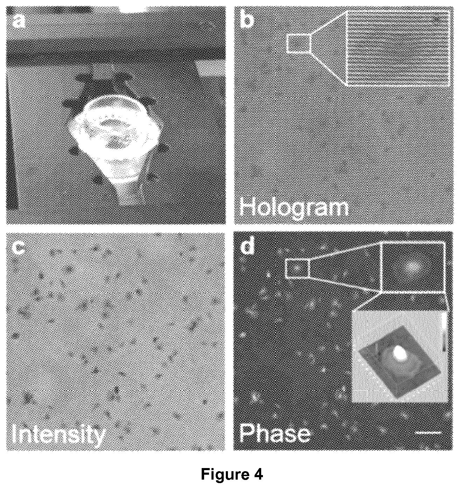

Fig. 4. (a) The well positioned on the DHM for analysis, (b) Hologram with a zoom on platelets aggregate. (c) Hologram intensity with an insert showing the fringe pattern deformation due to a platelet aggregate d) The phase image with an insert representing the 3D extraction of the platelets aggregate based on the optical high (grey scale). (scale bar = 20μm)

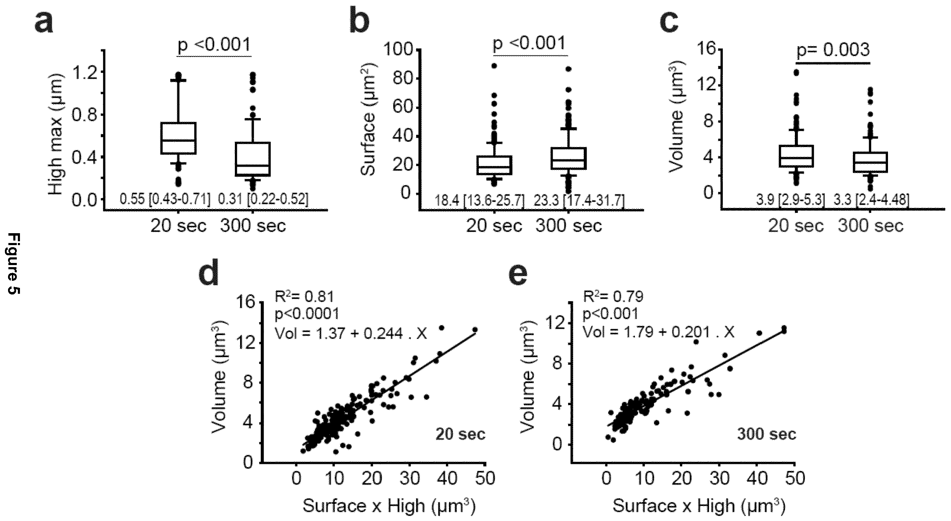

Fig. 5. (a), (b), (c) Comparison between respectively heights, surfaces and volumes of platelets aggregates obtained with the whole blood exposed to a shear rate of 100 s-1, after 20 sec and 300 sec. (d) and (e) Correlations between the aggregates volumes and the surface-height product obtained at 20 sec and 300 respectively.

## Detailed Description of the Invention

The present invention discloses a method able to characterize the 3D platelets or aggregates shapes by using the quantitative phase contrast imaging provided by DHM or DDHM. This original method will be of a great interest in the study of platelets physiology in clinical practice and in the development of new drugs.
DHM suitable for the present invention are for example disclosed in patent documents EP1399730, EP1631788, and EP2357539.

## Example

## Example 1: aggregate volume determination

### Materials and Methods

### Aggregates formation: the Impact-R test.

Blood sampling was approved by the CHU Charleroi hospital ethics committee (Comite' d'Ethique I.S.P.PC: OM008). The studies conform to the principles outlined in the Declaration of Helsinki. Venous blood was drawn from healthy donors (from the *Centre Hospitalier Universitaire de Charleroi,* Belgium) into tubes with 3.2% sodium citrate solution, pH 7.4. A cone and plate device (Impact-R, Diamed®) was used (Fig. 4 a).
The platelet aggregates formation was induced by exposing 130 μL of whole blood in a well to laminar flow using the disposable Teflon conical rotors. After washing, images on a circumferential plane from the wells were captured by the image analyzer on impact-R, which quantifies the platelet aggregates formed, in 2D, on the surface. The results were expressed as number of aggregates detected and the average area of the aggregates, according to the shear forces. Two sets of test were performed, with the blood samples exposed to a shear rate of 100 s$^{-1}$ during 20 sec and 300 sec.
The Fig.1 shows the platelet aggregates observed in the well with the Impact-R microscope and by scan electron microscopy (SEM). By SEM the platelet spreading is clearly observable on small aggregates.

### DHM setup

This section describes the off-axis DHM with a source of partially spatial coherence light to record the holographic information. The configuration is shown in Fig. 2.
A coherent source (a mono-mode laser diode, λ=532nm) is made partially spatial coherent by focusing the beam, by the lens ML1, close to the rotating plane of the ground glass (GG). The lens L1 collimates the beam that is divided by a beam splitter BS1. The object beam reflected by BS1 illuminates the sample in the analysis chamber in transmission. The plane, on which the platelet aggregates are sticking, is imaged by the couple of lenses ML3-L2 on the CCD camera sensor. The reference beam transmitted by the beam splitter BS1 has a similar optical path, excepted that there is no analysis chamber with a sample. The two beams are interfering on the CCD sensor.
The reference beam is slanted on the sensor with respect to the object beam in such a way that a grating-like thin interference pattern is recorded. This off-axis configuration enables to implement the Fourier method to compute the complex amplitude of the object beam for every recorded frame. Thanks to the partially coherent illumination, raw holograms directly displayed on the PC screen are with low noise and fully meaningful for the operator as with an usual microscope (Fig. 4 b). With full coherent illumination, the direct image displayed on the screen is usually too noisy to be interpreted by a direct viewing.

The microscope lenses ML2 and ML3 are Leica 40x, NA 0.6. The camera is a JAI, with a CCD providing holograms of 1024 X 1024 pixels, with a pixel size of 7.4$\mu$m x 7.4$\mu$m. The field of view is 185 $\mu$m x 185 $\mu$m.

### *Holograms acquisition and background correction*

As observed in Fig. 3a the recorded fields of view by the DHM show aggregates disseminated on a background field. The main objective is to measure the aggregate shapes thanks to the quantitative phase contrast imaging capability of the DHM. In this section, we describe the processing steps to obtain the complex amplitude information and the resulting phase information on the aggregates.

In digital holographic microscopy, optic elements can introduce minor distortions in the background phase. This is particularly pertinent when the main parameter analyzed is the phase information that allows to quantify the morphological shapes of the platelet aggregates. For that purpose, it is necessary to implement a phase background subtraction and permanent defects elimination. However, to do that, it is necessary to insert the sample in which there are already the aggregates, making it difficult to perform the background phase subtraction on the basis of a single hologram. In order to overcome this issue, we first recorded a sequence of $N$ holograms (in the reported experiment, $N=29$) of the sample moved with lateral translations. This sequence of holograms allows us to implement corrections of the defects in the intensities and the phase maps in a self-consistent way. The defects correction uses the procedures that are described as follow.

The $S$ complex amplitude $g_k(s,t)$, where $(s,t)$ are the discrete spatial variables, with $k = 0,..., N - 1$, $s,t = 0,...,n - 1$ and $n$ is the pixel number by side, are extracted from a set of recorded hologram $h_k(s,t)$. The original holograms have a size of 1024x1024 pixels giving rise to complex amplitudes of the same size.

A first step of correction on the intensity field is performed. For that purpose, the averaged intensity $i_a(s,t)$ of the intensities $i_k(s,t) =| g_k(s,t)|^2$ is computed. The corrected intensities are computed thanks to:

$$i_{ck}(s,t) = i_k(s,t)/i_a(s,t) \tag{1}$$

For the correction of the phase maps $\varphi_k(s,t)$ associated to $g_k(s,t)$, the averaged phase map $\varphi_a(s,t)$ is computed and subtracted to every phase map $\varphi_k(s,t)$ to obtain the corrected phase maps $\varphi_{ck}(s,t)$ according to:

$$\varphi_{ck}(s,t) = \mathrm{mod}_{2\pi}\left\{\varphi_k(s,t) - \varphi_a(s,t)\right\} \tag{2}$$

The phase background is after set, in average, to a fixed phase value. In our case, for the phase values ranging on 255 levels (1 byte), we set the background to the level 30 to avoid phase jumps. The process is efficient and is illustrated by the Fig. 3 a.

On each recorded hologram, the physical heights $h_k(s,t)$ are determined by:

$$h_k(s,t) = \frac{\varphi_k(s,t)\lambda}{255(n_2 - n_1)} \tag{3}$$

Where $n_2$ is the platelet refractive index ($n_2 = 1.399$) and $n_1$ is the air refractive index $n_1 = 1$).

### **Results and discussion**

### *Platelet Aggregate detection*

In the aim to determine the phase error, the regions covered by the aggregates were detected to evaluate the phase fluctuations outside those regions. Those ones are then used to establish the accuracy of the phase measurements. The detection processing that we used is identical to the one described by C. Yourassowsky and F. Dubois in "High throughput holographic imaging-in-flow for the analysis of a wide plankton size range" Opt. Express 22, 6661-6673 (2014). It is based on a high-pass filtering of the $g_{ck}(s,t)$. Indeed, when there is locally no aggregate in some areas of the field of view, $g_{ck}(s,t)$ is almost constant in this region and the high-pass filtering process gives complex amplitude with very low module values that are eliminated by a simple threshold operation. On the contrary, the high-pass filtering enhances the presence of an aggregate by local strong complex amplitude.

To avoid border effects by the high-pass filter, it is constituted by an inverse Gaussian filter $H(u,v)$ defined by:

$$H(u,v) = \left(1 - \exp\left\{-\left(u^2 + v^2\right)\Big/2\sigma^2\right\}\right) \tag{4}$$

Where $(u,v)$ are the discrete spatial frequencies $(u,v = -n/2,...,n/2-1)$, and $\sigma$ is the width of the high-pass filter. In practice, $\sigma = 10$ gives good results. After the inverse Fourier transformation in the filtering process, a threshold is applied. The intensity image is computed and converted into 255 gray levels in such a way that aggregates give rise to bright regions, even with saturation, and that the background regions give intensity of few grey levels (typically less than 10). The threshold level we applied is 40. It results binary images constituted by a dark background in which there are unconnected bright regions. A surface analysis is performed in order to eliminate the smaller areas (<4pixels). A morphological dilatation is performed with a 10-pixels diameter structural element in order to guarantee that the bright areas partly cover already the background region.

As we want to assess the fluctuation of the phase background, we invert the contrast to obtain a mask on which the background fluctuations are computed. An example of result is shown in Fig. 3.b.

The full set of phase images is used to assess the fluctuations of the phase background by computing the standard deviation that is given by StDev=3.2 grey level. Considering this value as the typical error on the phase, we obtain, tanks to Eq. (3), that the error $\Delta h$ on the height of the aggregates is 17.05nm. By using classical statistical tools, it results that the error on the volume of an aggregate $\Delta V$ can be expressed by:

$$\Delta V = s\sqrt{N}\Delta h \tag{5}$$

Where s is the pixel area and $N$ the number of pixel covered by the aggregate. Thanks to Eq. (5), assessment of the error on the volume computation is given here below.

***Computation of the volume of the platelet aggregates***

The volume of the aggregate a in the hologram $k$ is obtained by computing in the corresponding phase image:

$$V_{ka} = s\sum_{l,m=0}^{n} h_k(l,m)w_{ka}(l,m) \tag{6}$$

Where s is the area of one pixel, $n$ is the number of pixels by phase image side and $w_{ka}(l,m)$ is a region of interest function that is equal to 1 when the pixel belongs to the aggregate a, and which is zero elsewhere. $w_{ka}(l,m)$ can be achieved by performing:

1/ a morphological dilatation on each non-zero valued zone of the binary detection image obtained by the method described above;
2/ As each resulting zone will exceed the actual area of the corresponding aggregate, a low-level threshold operation is performed (Threshold value = background level + 3 grey levels) in order to keep the only pixels belonging to the aggregate.

However, with this method it is not excluded to have overlaps between some neighbor aggregates that could influence the assessment of the aggregate volume. For that reason, we decided to select regions of interest that are not too close to each other to avoid the overlaps effect. This was performed to have a statistical relevance. On the basis of 29 original holograms corresponding to shear rate exposition times of 20s and 300s, we processed a total of 340 platelet aggregates. To observe the platelet aggregates spreading process, we exposed whole blood to a constant shear rate ($100s^{-1}$) during 20 sec and 300 sec. As first indications, for those expositions, the averaged platelet volumes are, respectively, $4.50\mu m^3$ and $3.74\mu m^3$ with the average errors of $0.015\mu m^3$ in both cases. More significant information were extracted as described below. This average error of less than 0.5% is surprisingly low.

On the figure 4, we show the different steps of the analysis. The well of the impact-R test is placed on the motorized table of the DHM for analysis (Fig. 4 a). The figure 4 d shows a zoom on an aggregate and a 3D representation extracted from the phase, where the spreading is clearly observable.

DHM allows to extract aggregates maximal highs, surfaces and volumes. On the figure 5, we observe the highs, surfaces and volumes of aggregates obtained with the whole blood exposed to a shear rate of 100 $s^{-1}$, after 20 sec and 300 sec. A significant decrease is observed after 300 sec for the highs (p<0.001) and the volumes (p=0.003). In contrast, the surfaces increase after 300 sec (p<0.001). On the figures 5(d) and 5(e), we plot the correlations between the volumes (Vol) and the product of the maximum high by the aggregate surface (S x H). A tight association between the global volume and the SxH product is observed. At 20 sec, the angular coefficient of the regression is 0.24 and at 300 sec, when the volumes decrease due to the spreading, the coefficient is 0.20. It is the first time that this observation is reported.

Platelet receptors and cytoplasmic molecules, such as calpain-1 and talin involved in cascades after adhesion and activation have been extensively studied. However, the effect of these cascades on plug morphology have been commonly analyzed through the transmission microscopy alone or combined with fluorescence but in 2D. The DHM is very convenient to use and it could give more data on the role of molecules involved in the spreading. By using a flow chamber directly on the DHM, it is possible to study dynamically the formation of platelets aggregates but in 3D.

## Example 2 Chronic Obstructive Pulmonary Disease (COPD) detection

COPD (chronic obstructive pulmonary disease) is a major cause of death worldwide with estimates projecting it as the third cause of death in 2020. One of the important characteristics of this disease is the presence of both the lung and systemic chronic low-grade inflammation. In addition, observational studies show a strong statistical association between COPD and cardiovascular disease.

Systemic inflammation has been identified as a causal factor for atherosclerosis although all the mechanisms involved are not all known. The systemic low-grade inflammation, hypoxia and oxidative stress are factors that may explain the increased cardiovascular risk and mortality in COPD. During exacerbations the systemic inflammation increases, hypoxia is more marked and it has been shown with autopsies of COPD patients died during an exacerbation, that the main causes of death were due either to a decompensated heart failure (37%) or pulmonary embolism (21%). Donaldson et al suggested in 2013 that the risk of cardiovascular events was increased in these patients during an exacerbation. They report a relative risk of myocardial infarction of 2.3 (1.1 to 4.7) to five days after the onset of exacerbation. In recent years, the potential role of platelet activation in the genesis of atherothrombotic events has been demonstrated in smokers and patients suffering from COPD. During this year a study in Pneumology has been performed to study in patients (11 COPD exacerbation, 16 stable COPD and 13 controls) platelet aggregates in 3D.

The present example shows the interest of the quantitative data that can be obtained by the method of the invention in helping diagnosis of COPD complications.

## Material and Methods

The diagnosis of COPD is based on the GOLD classification (Table 1) obtained from pulmonary function tests (PFT). The pulmonary function tests are those already previously performed in stable condition or performed at discharge.

The patients aged over 45 years, with moderate to severe COPD (Stage II-III-IV) with or without hypoxemia, in stable condition or exacerbation were included in the study.

Exacerbations were defined based on the following symptoms: increase of the dyspnea, cough and / or sputum. Exacerbations were classified when infectious pathogen was found in sputum or when the patient had received antibiotics. (Based on Anthonisen criteria, an inflammatory syndrome or a radiological image compatible with pneumonia)

COPD patients were matched for age and sex with non-smoking healthy subjects.

### Table1

| FEV1/FVC ratio < 0,7 | | |
|---|---|---|
| Stage I | Mild | FEV1 > 80 % |
| Stage II | Moderate | 50 % < FEV1 < 80 % |
| Stage III | Severe | 30 % < FEV1 < 50 % |
| Stage IV | Very severe | FEV1 < 30% |

*FEV1 : Forced Expiratory Volume in 1 second.*
*FVC: Forced vital capacity: the determination of the vital capacity from a maximally forced expiratory effort.*

## Exclusion criteria

Patients with other respiratory diseases (such as pulmonary fibrosis) or unstabilized heart disease, or a cancer or cirrhosis, were excluded. Patients taking antiplatelet agents such as clopidogrel or anti vitamin K (acenocoumarol), were also excluded.

Among 23 patients hospitalized with exacerbation of COPD, 11 patients (10 superinfected and 1 not superinfected) could be included in the study. 12 patients were excluded (4 for associated cardiac failure, pulmonary fibrosis associated to 1, 2 for failure samples, 2 for refusal, 1 Hepatitis C and 2 for taking Sintrom)

Among 22 COPD patients selected by consultation, 16 in stable condition patients were included in the study. 6 patients could not be included (2 for refusal, 2 for severe heart failure associated exacerbation and 2 for COPD exacerbation at the time of consultation).

For each patient, a careful history was made and the computer records were consulted in search of the history of home treatment, to stop a smoking, long-term oxygen therapy at home, presence an associated emphysema.

Thirteen control subjects of exacerbation in patients were taken.

Patients in exacerbation and in stable condition were subjected to arterial blood samples (to assess the degree of hypoxemia) and venous blood samples for the study of hematological parameters (number of leukocytes, platelets and red blood cells, CRP, fibrinogen). The control patients have been venous samples. Blood samples were taken within 48 hours of admission for patients in exacerbation.

### Results

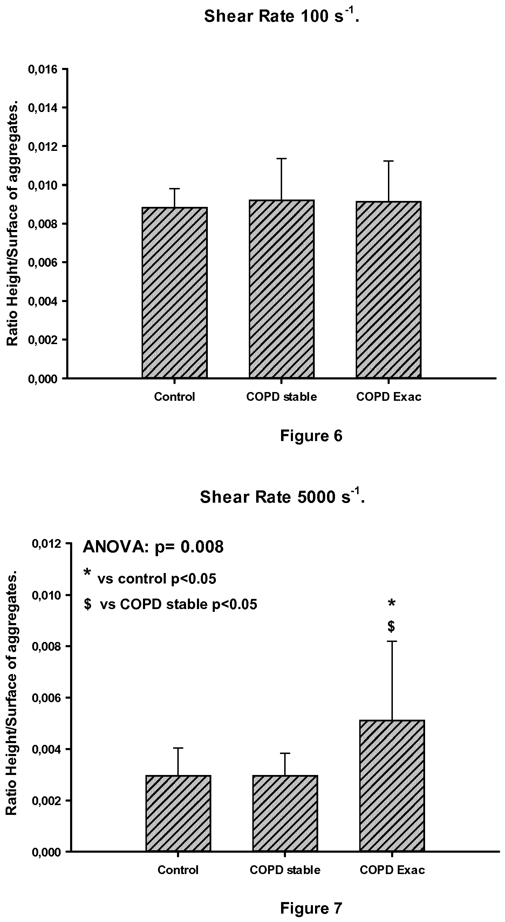

The figure 6 shows that the shape of the aggregates - Quantified by the ratio aggregate height / aggregate surface, both measured on the optical phase information - between the three groups is not altered at low shear rate (100s-1). In contrast, at high shear rate (5000s-1), Figure 7 the ratio height/surface in exacerbated COPD patients is significantly increased. This indicates that the shear rate and the presence of an exacerbation play a role on the aggregate formation.

It is the first time that an alteration of the of the platelet aggregates morphology is observed in COPD patients. It is well known that platelets play a key role in the occurrence of cardiovascular events. Based on clinical studies it would be possible to show that the alteration of the morphology of platelet aggregates could be used in the prediction of a thromboembolic event. This can be applied to other pathologies such as diabetes, hypertension, autoimmune disease, sepsis, renal failure, etc. Thus, all diseases well known to increase cardiovascular events.

### Conclusion

The DHM allows to study the morphological dynamic of the platelets adhesion, aggregation and spreading in *in-vitro* models. This original method is of a great interest in the study of platelets physiology, physiopathology in clinical practice and in the development of new drugs. It is the first time that platelets aggregates are analyzed by DHM.

### Claims

**1.** Method for the quantitative analysis of blood platelets and aggregates comprising the steps of:

   a) providing a sample comprising blood platelets aggregates;
   b) obtain a 3D representation of the platelets aggregates by the use of DHM or DDHM;
   c) extract quantitative information about the platelets aggregates from said 3D representation
   **characterised in that** said quantitative information is related to the group consisting of shape, such as form factor, volume, spreading, surface, surface to volume ratio, and squared aggregate perimeter to aggregate area ratio and wherein the step of obtaining a 3D representation comprises a phase background subtraction and permanent defects elimination by recording a sequence of N holograms of the sample moved with lateral translations, said background and permanent defects being determined on the said sequence.

**2.** Method for the quantitative analysis of blood platelets according to claim 1 wherein the background and permanent defects subtraction comprises the steps of calculating an $N$ complex amplitudes , with $k = 0,...,N$ -1, on each of the $N$ holograms, where $(s,t)$ are the discrete spatial variables, with $s = 0,...,N_1$ -1, $t = 0,...,N_2$ -1and $N_1$ and $N_2$ are the pixel numbers along, respectively, the $s$ and $t$ directions, are extracted from a set of recorded hologram $h_k(s,t)$, the original holograms having a size of $H_1$ and $H_2$ pixels giving rise to complex amplitudes of the size $N_1$ and $N_2$, where $N_1 \leq H_1$ and $N_2 \leq H_2$, a first step of correction on the intensity field being performed by computing the averaged intensity $i_a(s,t)$ of the intensities $i_k(s,t) = |g_k(s,t)|^2$ the corrected intensities being computed by the formula $i_k(s,t) = i_k(s,t)/i_a(s,t)$, and the an averaged phase map $\varphi_a(s,t)$ being computed and subtracted to every phase map $\varphi_k(s,t)$ to obtain the corrected phase maps $\varphi_{ck}(s,t)$ according to $\varphi_{ck}(s,t) = \mod_{2\pi}\{\varphi_k(s,t) - \varphi_a(s,t)\}$.

3. The method for the quantitative analysis of blood platelets according to claim 2 wherein the phase background is set, in average, to a fixed phase value.

4. The method for the quantitative analysis of blood platelets according to claim 3 wherein, on each recorded hologram,

$$h_k(s,t) = \frac{\varphi_{ck}(s,t)\lambda}{255(n_2 - n_1)}$$

the physical heights $h_k(s,t)$ are determined by: where $n_2$ is the platelet refractive index and $n_1$ is the surrounding medium refractive index.

5. Method according to any of the previous claims wherein said platelets aggregates are adhering on a surface.

6. Method according to claim 5 wherein the step of providing blood platelets aggregates comprises the steps of providing platelets in suspension and submit said platelets in suspension to a predefined shear rate in the vicinity of the surface prior to observation by DHM or DDHM.

7. Method according to claim 6 wherein the quantitative analysis is performed dynamically, step b) and c) being performed iteratively on a sample submitted to a controlled shear rate.

8. Method according to any of the previous claims comprising the step of acquiring both holographic and fluorescence images of the cells.


**Patentansprüche**

1. Verfahren für die quantitative Analyse von Thrombozyten und Aggregaten, folgende Schritte umfassend:

   a) Bereitstellen einer Probe, die Thrombozytenaggregate umfasst,
   b) Erzielen einer 3D-Darstellung der Thrombozytenaggregate durch die Verwendung von DHM oder DDHM,
   c) Extrahieren quantitativer Informationen über die Thrombozytenaggregate aus den besagten 3D-Darstellungen,
   **dadurch gekennzeichnet, dass** die besagte quantitative Informationen die Gruppe betreffen, bestehend aus Gestalt, wie beispielsweise Formfaktor, Volumen, Verbreitung, Oberfläche, Verhältnis Oberfläche zu Volumen und Verhältnis quadrierter Aggregatperimeter zu Aggregatfläche, und wobei der Schritt des Erzielens einer 3D-Darstellung eine Phasenhintergrundsubtraktion und eine Permanentdefekteliminierung durch Aufzeichnen einer Sequenz von $N$-Hologrammen der Probe, bewegt mit seitlicher Translation, umfasst, wobei der besagte Hintergrund und die permanenten Defekte an der Sequenz bestimmt werden.

2. Verfahren zur quantitativen Analyse von Thrombozyten nach Anspruch 1, wobei die Hintergrund- und Permanentdefektsubtraktion die Schritte des Berechnens von $N$-komplexen Amplituden, mit $k = 0, ..., N\text{-}1,$ an jedem der $N$-Hologramme umfasst, wobei $(s, t)$ die diskreten räumlichen Variablen sind, wobei $s = 0, ..., N_1\text{-}1, t = 0, ..., N_2\text{-}1$ und $N_1$ und $N_2$ die Pixelzahlen in der s- beziehungsweise der $t$-Richtung sind, aus einem Satz aufgezeichneter Hologramme $h_k(s, t)$ extrahiert werden, wobei die ursprünglichen Hologramme mit einer Größe von $H_1$- und $H_2$-Pixeln komplexe Amplituden der Größe $N_1$ und $N_2$ entstehen lassen, wobei $N_1 \leq H_1$ und $N_2 \leq H_2$, wobei ein erster Schritt der Korrektur an dem Intensitätsfeld ausgeführt wird durch Berechnen der gemittelten Intensität $i_a(s, t)$ der Intensitäten $i_k(s, t) = |g_k(s, t)|^2$, wobei die korrigierten Intensitäten durch die Formel $i_{ck}(s, t) = i_k(s, t)/i_a(s, t)$ berechnet werden und die gemittelte Phasenabbildung $\varphi_a(s, t)$ berechnet und von jeder Phasenabbildung $\varphi_k(s, t)$ subtrahiert wird, um die korrigierten Phasenabbildungen $\varphi_{ck}(s, t)$ gemäß $\varphi_{ck}(s, t) = mod_{2\pi}\{\varphi_k(s, t) - \varphi_a(s, t)\}$ zu erzielen.

3. Das Verfahren zur quantitativen Analyse von Thrombozyten nach Anspruch 2, wobei der Phasenhintergrund im Durchschnitt auf einen festen Phasenwert eingestellt ist.

4. Das Verfahren zur quantitativen Analyse von Thrombozyten nach Anspruch 3, wobei die physikalische Höhe $h_k(s,$

$$h_k(s,t) = \frac{\varphi_{ck}(s,t)\lambda}{255(n_2 - n_1)}$$

$t)$ an jedem aufgezeichneten Hologramm durch Folgendes bestimmt wird: wobei $n_2$ der Brechungsindex des Thrombozyten ist und $n_1$ der Brechungsindex des umgebenden Mediums ist.

**5.** Verfahren nach irgendeinem der vorhergehenden Ansprüche, wobei die Thrombozytenaggregate an einer Oberfläche haften.

**6.** Verfahren nach Anspruch 5, wobei der Schritt des Bereitstellens von Thrombozytenaggregaten die Schritte des Bereitstellens von Thrombozyten in Suspension und des Unterziehens der Thrombozyten in der Suspension einer vordefinierten Scherrate in der Nähe der Oberfläche vor der Beobachtung durch DHM oder DDHM umfasst.

**7.** Verfahren nach Anspruch 6, wobei die quantitative Analyse dynamisch durchgeführt wird, wobei Schritt b) und c) iterativ an einer Probe, die einer gesteuerten Scherrate unterliegt, durchgeführt werden.

**8.** Verfahren nach irgendeinem der vorhergehenden Ansprüche, den Schritt des Erfassens von sowohl holografischen als auch Fluoreszenzbildern der Zellen umfassend.

## Revendications

**1.** Procédé pour une analyse quantitative de plaquettes sanguines et d'agrégats, comprenant les étapes de :

a) fournir un échantillon comprenant des agrégats de plaquettes sanguines ;
b) obtenir une représentation 3D des agrégats de plaquettes en utilisant une microscopie par holographie numérique, DHM, ou une microscopie par holographie numérique différentielle, DDHM ;
c) extraire des informations quantitatives concernant les agrégats de plaquettes, de ladite représentation 3D ;

**caractérisé en ce que** :
lesdites informations quantitatives sont sélectionnées parmi le groupe consistant en une forme, par exemple un facteur de forme, un volume, une dispersion, une surface, un rapport « surface/volume », et un rapport « périmètre d'agrégats au carré/aire d'agrégats », et dans lequel l'étape d'obtention d'une représentation 3D comprend une soustraction de bruit de fond de phase et une élimination de défauts permanents, en enregistrant une séquence de « $N$ » hologrammes de l'échantillon déplacé selon des translations latérales, ledit bruit de fond et lesdits défauts permanents étant déterminés sur ladite séquence.

**2.** Procédé pour une analyse quantitative de plaquettes sanguines selon la revendication 1, dans lequel la soustraction de bruit de fond et de défauts permanents comprend les étapes consistant à calculer « $N$ » amplitudes complexes, avec $k = 0, ..., N\text{-}1$, sur chacun des « $N$ » hologrammes, où « $(s, t)$ » sont les variables spatiales discrètes, avec $s = 0, ..., N_1\text{-}1$, $t = 0, ..., N_2\text{-}1$, et « $N_1$ » et « $N_2$ » sont les nombres de pixels le long, respectivement, des directions « $s$ » et « $t$ », sont extraits d'un ensemble d'hologrammes enregistrés $h_k(s, t)$, les hologrammes d'origine présentant une taille de $H_1$ et $H_2$ pixels donnant lieu à des amplitudes complexes des tailles $N_1$ et $N_2$, où $N_1 \leq H_1$ et $N_2 \leq H_2$, une première étape de correction sur le champ d'intensité étant mise en œuvre en calculant l'intensité moyenne $i_a(s, t)$ des intensités $i_k(s, t) = |g_k(s, t)|^2$, les intensités corrigées étant calculées selon la formule $i_{ck}(s, t) = i_k(s, t)/i_a(s, t)$, et la carte de phase moyenne $\varphi_a(s, t)$ étant calculée et soustraite à chaque carte de phase $\varphi_k(s, t)$, en vue d'obtenir les cartes de phase corrigées $\varphi_{ck}(s, t)$ selon $\varphi_{ck}(s, t) = \text{mod}_{2\pi}\{\varphi_k(s, t) - \varphi_a(s, t)\}$.

**3.** Procédé pour l'analyse quantitative de plaquettes sanguines selon la revendication 2, dans lequel le bruit de fond de phase est défini, en moyenne, sur une valeur de phase fixe.

**4.** Procédé pour l'analyse quantitative de plaquettes sanguines selon la revendication 3, dans lequel, sur chaque hologramme enregistré, les hauteurs physiques $h_k(s, t)$ sont déterminées par l'équation ci-dessous :

$$h_k\left(s,t\right)=\frac{\varphi_{ck}\left(s,t\right)\lambda}{255\left(n_2 - n_1\right)}$$

, où « $n_2$ » est l'indice de réfraction plaquettaire et « $n_1$ » est l'indice de réfraction moyen environnant.

**5.** Procédé selon l'une quelconque des revendications précédentes, dans lequel lesdits agrégats de plaquettes adhèrent à une surface.

**6.** Procédé selon la revendication 5, dans lequel l'étape consistant à fournir des agrégats de plaquettes sanguines comprend les étapes consistant à fournir des plaquettes en suspension et à soumettre lesdites plaquettes en suspension à un taux de cisaillement prédéfini au voisinage de la surface avant l'observation par microscopie DHM ou DDHM.

7. Procédé selon la revendication 6, dans lequel l'analyse quantitative est mise en œuvre de manière dynamique, les étapes b) et c) étant mises en œuvre de manière itérative sur un échantillon soumis à un taux de cisaillement commandé.

8. Procédé selon l'une quelconque des revendications précédentes, comprenant l'étape consistant à acquérir à la fois des images holographiques et des images de fluorescence des cellules.

**Figure 1**

**Figure 2**

(a)                                    (b)

**Figure 3**

**Figure 4**

Figure 5

## Shear Rate 100 s$^{-1}$.

Figure 6

## Shear Rate 5000 s$^{-1}$.

Figure 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1399730 A
- EP 1631788 A
- EP 2357539 A

**Non-patent literature cited in the description**

- **KS. SAKARIASSEN ; E. FRESSINAUD ; JP. GIRMA ; D. MEYER ; BAUMGARTNER.** Role of platelet membrane glycoproteins and von Willebrand factor in adhesion of platelets to subendothelium and collagen. *Ann N Y Acad Sci.,* 1987, vol. 516, 52-65
- **JAKSON et al.** Dynamics of platelet thrombus formation. *J Thromb Haemost.,* 2009, vol. 7 (1), 17-20
- **SP. JACKSON.** The growing complexity of platelet aggregation. *Blood,* 2007, vol. 109, 5087-5095
- **C. YOURASSOWSKY ; F. DUBOIS.** High through-put holographic imaging-in-flow for the analysis of a wide plankton size range. *Opt. Express,* 2014, vol. 22, 6661-6673